(19) Europäisches Patentamt / European Patent Office / Office européen des brevets

(11) **EP 3 145 157 A1**

(12) **EUROPEAN PATENT APPLICATION**

(43) Date of publication:
**22.03.2017  Bulletin 2017/12**

(51) Int Cl.:
**H04L 29/08** *(2006.01)*

(21) Application number: **15306460.5**

(22) Date of filing: **18.09.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **ALCATEL LUCENT**
**92100 Boulogne-Billancourt (FR)**

(72) Inventor: **TANG, Siyu**
**2018 Antwerpen (BE)**

(74) Representative: **ALU Antw Patent Attorneys**
**Intellectual Property and Standards**
**Copernicuslaan 50**
**2018 Antwerp (BE)**

(54) **METHOD AND DEVICE FOR TRANSMISSION OF CONTENT**

(57)    Embodiments relate to a method for transmission of content, executed by a content transmission device (2, 3), comprising:
- receiving (T1) requests (RQ) for content (C) from a plurality of clients (4), wherein the requests (RQ) are associated with respective content reception deadlines (DD),
- determining (T2) a content transmission schedule (SCH) for transmitting the requested content (C) to the respective clients (4), in function of the content reception deadlines (DD),
- transmitting (T4, T5, T6) content (C) to the clients (4) in function of the content transmission schedule (SCH), wherein the method further comprises:

- receiving (T1) consumption likelihood data (CL) associated with at least one client (4), representative of a likelihood that said client consumes the requested content,
- determining (T3) whether a congestion condition is met in function of the content reception deadlines,
wherein, if said congestion condition is met, transmitting content to the clients in function of the content transmission schedule comprises:
- determining (T5) transmission priorities (p) in function of said consumption likelihood data,
- transmitting (T6) content to the clients in function of the transmission priorities.

FIG. 3

**Description**

FIELD OF THE INVENTION

The present invention relates to the field of telecommunication. In particular, the present invention relates to methods and devices for transmission of content.

BACKGROUND

The interactive character of emerging applications such as WebRTC, on-line gaming and augmented reality indicates that timely delivery is key. Deadline-aware scheme is therefore proposed to prioritize bits that have the most urgent deadline at the expense of the delivery of less urgent bits. An example of proposed deadline-aware content delivery protocol is SCAP (Shared Content Addressing Protocol).

A practical implementation at the receiver is to maintain a large enough play-out buffer that can store bits that are delivered before their deadline, so that delivery of bits before their deadline poses no problem. Therefore, the sender will keep sending the requested content until the user cancels the previous request or initiates a different one. By allowing the delivery of content before their deadlines, network resource utilization is maximized and bandwidth consumption peaks are avoided. In case of insufficient network capacity, timely delivery of traffic can no longer be guaranteed. The packets whose requested deadlines are violated will be dropped as the congestion signal to the clients that initiated the request. The packet drops being issued, consequently, impair the viewing experience (if transmission is unreliable) at the end-user or incurs data retransmission which leads to longer end-to-end delay (if transmission is reliable).

With the known congestion control scheme in deadline-aware systems, e.g., in SACP, packet drops are issued equally from those whose deadlines are violated. Accordingly, all user whose deadlines are violated are affected equally by the congestion.

SUMMARY

It is thus an object of embodiments of the present invention to propose a method and a device for transmission of content, which do not show the inherent shortcomings of the prior art.

Accordingly, embodiments relate to a method for transmission of content, executed by a content transmission device, comprising:

- receiving requests for content from a plurality of clients, wherein the requests are associated with respective content reception deadlines,
- determining a content transmission schedule for transmitting the requested content to the respective clients, in function of the content reception deadlines,

- transmitting content to the clients in function of the content transmission schedule, wherein the method further comprises:
- receiving consumption likelihood data associated with at least one client, representative of a likelihood that said client consumes the requested content,
- determining whether a congestion condition is met in function of the content reception deadlines,

wherein, if said congestion condition is met, transmitting content to the clients in function of the content transmission schedule comprises:

- determining transmission priorities in function of said consumption likelihood data,
- transmitting content to the clients in function of the transmission priorities.

Correspondingly, embodiments relate to a content transmission device, comprising:

- means for receiving requests for content from a plurality of clients, wherein the requests are associated with respective content reception deadlines,
- means for determining a content transmission schedule for transmitting the requested content to the respective clients, in function of the content reception deadlines,
- means for transmitting content to the clients in function of the content transmission schedule,

wherein the content transmission device further comprises:

- means for receiving consumption likelihood data associated with at least one client, representative of a likelihood that said client consumes the requested content,
- means for determining whether a congestion condition is met in function of the content reception deadlines,

wherein, said means for transmitting content to the clients in function of the content transmission schedule comprises:

- means for determining transmission priorities in function of said consumption likelihood data, and
- means for transmitting content to the clients in function of the transmission priorities

if said congestion condition is met.

In some embodiments, determining a content transmission schedule comprises selecting the request associated with the earliest content reception deadline.

In some embodiments, transmitting content to the clients in function of the transmission priorities comprises transmitting flows of successive packets and applying, to the respective flows, packet drop rates r determined in function of the transmission priorities.

A transmission priority p associated with one client may be determined as :

$$p = CL^{\alpha}$$

wherein CL is the consumption likelihood associated with the client and $\alpha$ is a parameter.

The consumption likelihood data may be included in a request, for example in a layer 4 header of the request. Also, a request may specify the content and the content reception deadline at least partially in a Layer 4 header.

Correspondingly, embodiments relate to a method for reception of content, executed by a client device, comprising:

- determining consumption likelihood data, representative of a probability to consume requested content, in function of a content consumption history, and
- sending the consumption likelihood data to a content transmission device.

Embodiments also relate to a computer program comprising instructions for performing one of the method mentioned before when said instructions are executed by a computer.

BRIEF DESCRIPTION OF THE DRAWINGS

The above and other objects and features of the invention will become more apparent and the invention itself will be best understood by referring to the following description of embodiments taken in conjunction with the accompanying drawings wherein:

Figure 1 is a block diagram of a content transmission network,
Figures 2 and 3 are flowcharts of methods for content transmission in the network of Figure 1, and
Figure 4 is a structural view of a content transmission device of the network of Figure 1.

DESCRIPTION OF EMBODIMENTS

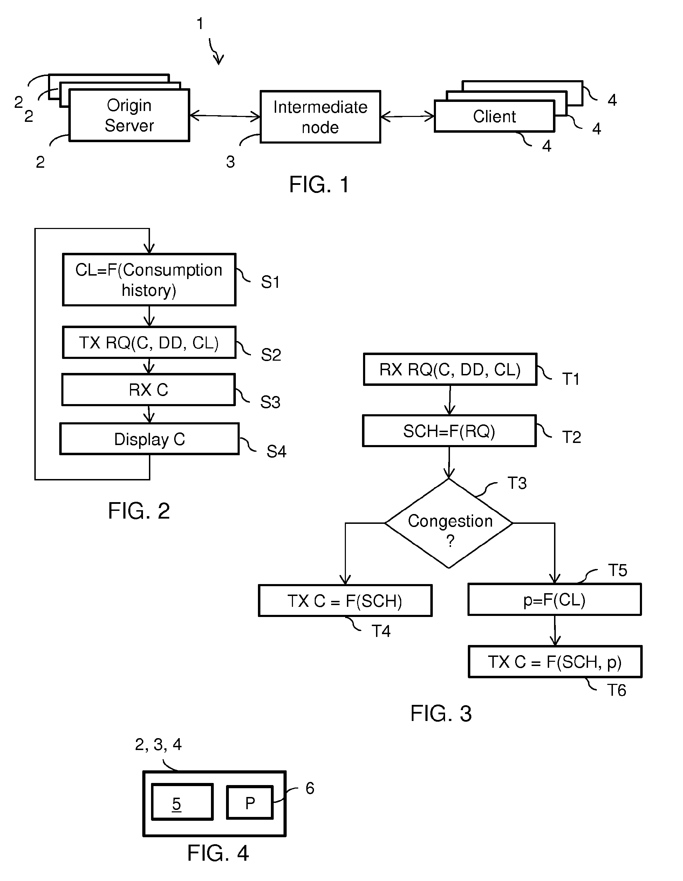

**Figure 1** is a block diagram of a content transmission network 1, comprising one or more origin servers 2, one or more intermediate nodes 3, and one or more clients 4.

An origin server 2 stores and/or generates content, for example multimedia data, interactive application data... A client 2 may send a request RQ for content to an origin server 2. One or more intermediate nodes 3 may act as intermediaries between clients 4 and origin servers 2, and provide various functions such as buffering, caching...

In the content transmission network 1, the clients 4, intermediate nodes 3 and origin servers 2 use a deadline-aware content transmission protocol. Accordingly, a request RQ for content sent by a client 4 is associated at least with one content reception deadline. For example, in some proposed implementations of the SCAP protocol, a request RQ contains, among others:

- a content address Ca which, in combination with the IP address of the origin server 2, uniquely identifies the starting bit of the requested content,
- a content size Cs, and
- a deadline begin Db and a deadline end De which, based on a linear interpolation, specify content reception deadlines for each bits of the requested content.

An intermediate node 3 receives requests RQ from various clients 4 or from a downstream intermediate node 3, obtains the requested content from the origin server 2, from an upstream intermediate node 3 and/or from a local cache or buffer, and respond to the requests RQ by sending the obtained content. The intermediate node 3 schedules the processing of the requests RQ based on a "Earliest Deadline First" principle.

Similarly, an origin server 2 receives requests RQ from various clients 4 and/or intermediary nodes 3, obtains the requested content from a local data store, and responds to the requests RQ by sending the obtained content. The origin server 2 schedules the processing of the requests RQ based on a "Earliest Deadline First" principle.

Content is transmitted from an origin server 2 to an intermediate node 3, between intermediate nodes 3 or from an intermediate node 3 to a client 4 as a flow of successive packets. Under good network conditions (i.e. sufficient bandwidth to deliver the requested contents), the "Earliest Deadline First" principle allows the content transmission network 1 to operate at maximum capacity. In contrast, in case of insufficient network capacity, timely delivery of traffic can no longer be guaranteed. For at least some of the content, packets whose requested deadlines are violated will be dropped as the congestion signal to the clients 4 that initiated the requests. The packet drops being issued, consequently, impair the viewing experience (if transmission is unreliable) of the affected user or incurs data retransmission which leads to longer end-to-end delay (if transmission is reliable).

In the content transmission network 1, the intermediate node 3 and/or the origin server 2 selects the flows affected by a network congestion based on a distinction between well-behaved users and impatient users. Indeed, not every delivered bit is effectively watched by a client 4. Experimental studies of large-scale Video-on-Demand systems have shown the existence of extremely "impatient" users, who go through the beginning of videos quickly (equivalent to zapping in linear TV) to select a video of interest. The analysis reveals that half of the video sessions are terminated by the user within the first 10mins, while 37% of the video session do not even last the first five minutes. A user who is inclined to perform frequent zapping, fast forwarding, or even viewing cancellation decreases the network efficiency in terms of the amount of bits that are downloaded but not viewed.

Accordingly, in the context of this description, a well-behaved user is a client 4 associated with a high probability of consuming the requested content and, in contrast, an impatient user is a client 4 associated with a low probability of consuming the requested content.

In case of network congestion, a content transmission device, which may be an intermediate node 3 or an origin server 2, prioritizes the flows of the well-behaved users over the flows of the impatient users. Accordingly, packets drops are issued mostly for the content flows requested by the impatient users. This allows limiting or even avoiding the need to issue packet drops for the content flows requested by the well-behaved users. This improves the viewing experience and/or the end-to-end delay for well-behaved users.

**Figure 2** is a flowchart of a method for consumption of content, executed by a client 4.

A client 4 sends successive requests RQ for content C (Step S2), receives (Step S3) and consumes (step S4) the requested content C. Consuming the content C may include displaying a video, outputting a sound, generating a user interface in function of interactive application data... The user may input commands for stopping the consumption of a content, selecting a new content, performing trick play functions (pause, resume, fast forward...). This results in new requests RQ.

Moreover, the client 4 determines a consumption likelihood CL in function of a consumption history (Step S1). The consumption likelihood CL is representative of a likelihood or probability that the client 4 consumes the requested content. Various machine learning techniques may be used for determining the consumption likelihood CL. For example, using a simple probabilistic approach, we define $f(x)=Pr[Y=y|X=x]$ as the probability that a user will keep watching a video for the next y seconds/minutes provided that he has watched the video for X seconds/minutes (or it has downloaded X seconds/minutes content). A user behavior prediction model keeps a historical value $f_{old}(x)$ and a new value $f_{new}(x)$ that are observed in the latest sampling interval. The prediction model uses weighted moving average to determine the prediction result, i.e., $f(x) \leftarrow (1-a) f_{old}(x)+\alpha f_{new}(x)$. Other machine learning techniques such as decision tree, logistic regression... may be used.

The client 4 sends the consumption likelihood CL to the origin server 2 and/or intermediate node 3. The consumption likelihood CL may be included in a request RQ, for example in a Layer 4 header according to a new specification of the SCAP protocol. In other embodiments, the consumption likelihood CL may be included in a message distinct from a request RQ.

Figure 2 shows steps S1 to S4 as successive steps, but they may be executed in parallel in some embodiments.

**Figure 3** is a flowchart of a method for transmission of content, executed by a content transmission device, which may be an origin server 2 or an intermediate node 3.

The content transmission device receives requests RQ for content C from a plurality of clients 4, directly and/or from downstream intermediate nodes 3 (Step T1). A request RQ is associated with at least one content reception deadline DD and with a consumption likelihood CL. For example, the content reception deadline DD and the consumption likelihood CL are included in the request RQ according to a new specification of the SCAP protocol. The consumption likelihood CL is associated with the client 4 sending the request RQ and specifies a probability that the client 4 consumes the requested content C, determined in function of a content consumption history.

Then, the content transmission device determines a content transmission schedule SCH for transmitting the requested content C to the respective clients 4, in function of the content reception deadlines DD (Step T2). In a simple embodiment, determining the content transmission schedule SCH comprises selecting the request RQ associated with the earliest content reception deadline DD. In other embodiment, determining the content transmission schedule SCH comprises more elaborate planning and/or ordering of the requests RQ in function of the content reception deadlines DD, taking into account for example the content already available in a local buffer or cache.

Then, the content transmission device determines whether a congestion condition is met in function of the content reception deadlines (Step T3). For example, the content transmission device determines a minimum bandwidth $R_{min}$ necessary to transmit the requested content C within the respective content reception deadlines, and compares it with the available bandwidth B. If $R_{min} > B$, then the congestion condition is met. Note that this can be determined before the congestion actually occurs. The minimum bandwidth Rmin could be determined not only for transmission between a single pair of sender-client, but parallel transmissions between multiple senders-clients.

If the congestion condition is not met, the content transmission devices sends content C according to the content transmission schedule SCH (Step T4). No packet drops is issued.

In contrast, if the congestion condition is met, the content transmission devices determine, for the respective clients 4, a transmission priority p in function of the associated consumption likelihood CL (Step T5). For example, the transmission priority is determined as:

$$p = CL^{\alpha}$$

where the relationship between bit/packet priority p and the consumption likelihood CL is controlled by parameter $\alpha$. For instance, with $\alpha=1$, a linear relation is assigned to p and CL. In other choices such as $\alpha=5$ or 10, a high bit/packet priority p is only assigned for those who has bigger likelihood to be viewed.

Then, the content transmission device sends content C according to the content transmission schedule SCH and the determines transmission priorities p (Step T6). For example, the content transmission device applies a packet drop rate r=1-p to the respective flows.

**Figure 4** is a structural view of a content transmission device, which may be an origin server 2 or an intermediate node 3. The content transmission device comprises a processor 5 and a memory 6. The memory 6 stores a computer program P which, when executed by the processor 5, causes the content transmission device to execute the method described above. A client 4 may have a similar structural architecture.

It is to be remarked that the functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared, for example in a cloud computing architecture. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Their function may be carried out through the operation of program logic, through dedicated logic, through the interaction of program control and dedicated logic, or even manually, the particular technique being selectable by the implementer as more specifically understood from the context.

It should be further appreciated by those skilled in the art that any block diagrams herein represent conceptual views of illustrative circuitry embodying the principles of the invention. Similarly, it will be appreciated that any flow charts represents various processes which may be substantially represented in computer readable medium and so executed by a computer or processor, whether or not such computer or processor is explicitly shown.

Embodiments of the method can be performed by means of dedicated hardware and/of software or any combination of both.

While the principles of the invention have been described above in connection with specific embodiments, it is to be clearly understood that this description is made only by way of example and not as a limitation on the scope of the invention, as defined in the appended claims.

## Claims

1. Method for transmission of content, executed by a content transmission device (2, 3), comprising:

   - receiving (T1) requests (RQ) for content (C) from a plurality of clients (4), wherein the requests (RQ) are associated with respective content reception deadlines (DD),
   - determining (T2) a content transmission schedule (SCH) for transmitting the requested content (C) to the respective clients (4), in function of the content reception deadlines (DD),
   - transmitting (T4, T5, T6) content (C) to the clients (4) in function of the content transmission schedule (SCH),

   wherein the method further comprises:

   - receiving (T1) consumption likelihood data (CL) associated with at least one client (4), representative of a likelihood that said client consumes the requested content,
   - determining (T3) whether a congestion condition is met in function of the content reception deadlines,

   wherein, if said congestion condition is met, transmitting content to the clients in function of the content transmission schedule comprises:

   - determining (T5) transmission priorities (p) in function of said consumption likelihood data,
   - transmitting (T6) content to the clients in function of the transmission priorities.

2. Method according to claim 1, wherein determining a content transmission schedule comprises selecting the request associated with the earliest content reception deadline.

3. Method according to one of claims 1 to 2, wherein transmitting content to the clients (4) in function of the transmission priorities comprises transmitting flows of successive packets and applying, to the respective flows, packet drop rates r determined in function of the transmission priorities.

4. Method according to one of claims 1 to 3, wherein a transmission priority p associated with one client (4) is determined as :

$$p = CL^{\alpha}$$

wherein CL is the consumption likelihood associated with the client and $\alpha$ is a parameter.

5. Method according to one of claims 1 to 4, wherein the consumption likelihood data is included in a request (RQ).

6. Method according to claim 5, wherein the consumption likelihood data is included in a Layer 4 header of the request.

7. Method according to one of claims 1 to 6, wherein a request specifies the content and the content reception deadline at least partially in a Layer 4 header.

8. Computer program (P) comprising instructions for performing the method of one of claims 1 to 7 when said instructions are executed by a computer.

9. Content transmission device (2, 3), comprising:

   - means (5, 6, P) for receiving requests for content from a plurality of clients, wherein the requests are associated with respective content reception deadlines,
   - means (5, 6, P) for determining a content transmission schedule for transmitting the requested content to the respective clients, in function of the content reception deadlines,
   - means (5, 6, P) for transmitting content to the clients in function of the content transmission schedule,

   wherein the content transmission device further comprises:

   - means (5, 6, P) for receiving consumption likelihood data associated with at least one client, representative of a likelihood that said client consumes the requested content,
   - means (5, 6, P) for determining whether a congestion condition is met in function of the content reception deadlines,

   wherein, said means for transmitting content to the clients in function of the content transmission schedule comprises:

   - means (5, 6, P) for determining transmission priorities in function of said consumption likelihood data, and

   - means (5, 6, P) for transmitting content to the clients in function of the transmission priorities

   if said congestion condition is met.

10. Method for reception of content, executed by a client device (4), comprising:

    - determining (S1) consumption likelihood data (CL), representative of a probability to consume requested content, in function of a content consumption history, and
    - sending (S2) the consumption likelihood data to a content transmission device (2, 3).

11. Computer program (P) comprising instructions for performing the method of claim 10 when said instructions are executed by a computer.

12. Client device (4) for reception of content, comprising:

    - means (5, 6, P) for determining consumption likelihood data, representative of a probability to consume requested content, in function of a content consumption history, and
    - means (5, 6, P) for sending the consumption likelihood data to a content transmission device.

13. System comprising one or more content transmission device (2, 3) according to claim 9 and one or more client device (4) according to claim 12.

FIG. 1

FIG. 2

FIG. 3

FIG. 4

Europäisches
Patentamt

European
Patent Office

Office européen
des brevets

# EUROPEAN SEARCH REPORT

Application Number

EP 15 30 6460

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 2 173 077 A1 (ALCATEL LUCENT [FR]) 7 April 2010 (2010-04-07) * abstract; claims 1-13; figures 1-5 * * Paragraphs: 0027, 0030, 0038, 0040-0044, 0059, 0061, 0064, 0077 * ----- | 1-9,13 | INV. H04L29/08 |
| X | US 9 060 292 B2 (CALLARD AARON [CA] ET AL) 16 June 2015 (2015-06-16) | 10-12 | |
| Y | * abstract; claims 1-20; figures 1-5B * * column 3, lines 41-50 * * column 4, lines 11-13 * * column 6, lines 14-64 * ----- | 1-9,13 | |

TECHNICAL FIELDS SEARCHED (IPC)

H04L

The present search report has been drawn up for all claims

| Place of search | Date of completion of the search | Examiner |
|---|---|---|
| The Hague | 15 March 2016 | Florou, Rafaella |

EPO FORM 1503 03.82 (P04C01)

## ANNEX TO THE EUROPEAN SEARCH REPORT
## ON EUROPEAN PATENT APPLICATION NO.

EP 15 30 6460

This annex lists the patent family members relating to the patent documents cited in the above-mentioned European search report.
The members are as contained in the European Patent Office EDP file on
The European Patent Office is in no way liable for these particulars which are merely given for the purpose of information.

15-03-2016

| Patent document cited in search report | | Publication date | Patent family member(s) | | Publication date |
|---|---|---|---|---|---|
| EP 2173077 | A1 | 07-04-2010 | NONE | | |
| US 9060292 | B2 | 16-06-2015 | CN | 104041091 A | 10-09-2014 |
| | | | US | 2013176846 A1 | 11-07-2013 |
| | | | WO | 2013102443 A1 | 11-07-2013 |

For more details about this annex : see Official Journal of the European Patent Office, No. 12/82